# EUROPÄISCHE PATENTSCHRIFT

(11) **EP 3 840 183 B1**
(45) Veröffentlichungstag und Bekanntmachung des Hinweises auf die Patenterteilung: **26.03.2025**
(21) Anmeldenummer: 20213652.9
(22) Anmeldetag: 14.12.2020
(51) Int. Cl.: H02K 3/28, H02K 3/12

(54) **STATOR MIT PINS FÜR EINE ELEKTRISCHE MASCHINE**
STATOR WITH PINS FOR AN ELECTRIC MACHINE
STATOR À BROCHES POUR UNE MACHINE ÉLECTRIQUE

(30) Priorität: 17.12.2019 DE 102019134793
(43) Veröffentlichungstag der Anmeldung: 23.06.2021
(73) Patentinhaber: Valeo eAutomotive Germany GmbH, 91056 Erlangen (DE)
(72) Erfinder: DOTZ, Boris, 81241 München (DE)

(56) Entgegenhaltungen:
- CN-U- 209 267 302
- DE-A1- 102017 210 445
- DE-T5- 112013 003 398
- DE-T5- 112013 006 691
- US-A1- 2015 207 374
- US-B2- 9 136 738

## Beschreibung

### Stand der Technik

Elektrische Maschinen sind allgemein bekannt und finden als Elektromotor zunehmend Anwendung für den Antrieb von Fahrzeugen. Eine elektrische Maschine besteht aus einem Stator und einem Rotor.

Der Stator umfasst eine Vielzahl von Nuten, in welchen die Windungen geführt werden. Die Windungen können aus isolierten Kupferstäben, als sogenannte Pins, gebildet werden. Der Rotor befindet sich im Stator und ist mit einer Rotorwelle verbunden.

Ein solcher Pin-, UPin- oder Hairpinmotor ist beispielsweise aus DE 11 2013 006 691 T5, DE 10 2010 053 719 A1, EP 3 096 441 A1, US 2011/0025162 A1, WO 2012/072754 A2 oder US 9,136,738 B2 bekannt.

### Aufgabe und Lösung

Aufgabe der vorliegenden Erfindung ist es, einen Stator nach Anspruch 1 mit Windungen aus Pins bereitzustellen, welcher einfach zu fertigen ist.

Erfindungsgemäß umfasst ein Stator für eine elektrische Maschine eine Vielzahl von Pins, die auf konzentrischen Kreisen mit unterschiedlichen Abständen zu einem Statormittelpunkt in Nuten im Stator angeordnet sind, und jeder konzentrische Kreis einen Layer bildet, wobei jeweils sechs Pins in unterschiedlichen Layer miteinander seriell verbunden sind und eine Windung bilden, ein erster Pin der Windung befindet sich in einer ersten Nut im 6n-1 Layer, wobei n eine natürliche Zahl ist, ein zweiter Pin der Windung befindet sich in einer zweiten Nut im 6n Layer, wobei die zweite Nut einen ersten radialen Abstand in einer ersten Umfangsrichtung des Stators zu der ersten Nut aufweist, ein dritter Pin der Windung befindet sich in einer dritten Nut im 6n-2 Layer, ein vierter Pin der Windung befindet sich in einer vierten Nut im 6n-3 Layer, ein fünfter Pin befindet sich in der ersten Nut im 6n-5 Layer, ein sechster Pin der Windung befindet sich in der zweiten Nut im 6n-4 Layer. Dabei kann eine Windung die Zähne auch mehrfach umlaufen. Die Layer können von außen nach innen zum Statormittelpunkt aufsteigend nummeriert werden. Die Zahl Null gehört nicht zu den erwähnten natürlichen Zahlen.

Ein Stator mit der erfindungsgemäßen Wicklung lässt sich einfach herstellen und erzeugt ein effizientes elektromagnetisches Feld. Die Verbindungsarten stellen eine elektrisch leitfähige Verbindung zwischen den Pins in den Nuten her. Die Verbindungsart kann ein Anschweißen von Leitern an die Pins sein oder die Pins können bereits als Doppelpin, sogenannte Upins, ausgebildet sein und dadurch bereits beim Einführen in den Stator eine Verbindung herstellen. Ferner stellt auch ein Verschweißen von zueinander gebogenen Endabschnitten von Pins eine Verbindungsart dar.

Erfindungsgemäß weist die dritte Nut zur vierten Nut einen ersten Abstand auf, der gleich dem ersten Abstand zwischen der zweiten Nut und der ersten Nut ist.

Das mit einer solchen Windung erzeugte Drehfeld weist weniger störende Harmonische auf und hat dadurch weniger Torqueripple und kleinere Drehmomentschwankungen sowie ein besseres NVH Verhalten.

Erfindungsgemäß liegt die dritte Nut benachbart und in Umfangsrichtung auf einer gleichen Nachbarschaftsseite bezüglich der ersten Nut wie die vierte Nut bezüglich der zweiten Nut.

Erfindungsgemäß weist der Stator eine erste und eine zweite Stirnseite auf und ist der erste und zweite Pin auf der zweiten Stirnseite mittels einer ersten Verbindungsart miteinander verbunden, der zweite und dritte Pin auf der ersten Stirnseite mittels einer zweiten Verbindungsart miteinander verbunden, der dritte und vierte Pin auf der zweiten Stirnseite mittels einer dritten Verbindungsart miteinander verbunden, der vierte und fünfte Pin auf der ersten Stirnseite mittels einer vierten Verbindungsart miteinander verbunden, der fünfte und sechste Pin auf der zweiten Stirnseite mittels einer fünften Verbindungsart miteinander verbunden, wobei sich die erste, zweite, dritte, vierte und fünfte Verbindungsart voneinander unterscheiden.

Die unterschiedlichen Verbindungsarten ermöglichen eine verbesserte Fertigung. Eine abwechselnde Lage der Verbindungsarten auf verschiedenen Stirnseiten ermöglicht das effiziente Bilden einer Windung um die zwischen den Nuten liegenden Statorzähne.

Selbst Verbindungsarten auf derselben Stirnseite des Stators können sich durch unterschiedliche Biegerichtungen eines Pinfußes zum Stator inneren oder -äußeren unterscheiden.

In einer Ausgestaltung der Erfindung kann ein Pin einer Windung ein erster, sechster, siebter oder zwölfter Endpin sein und als Einzelpin, beispielsweise als IPin, ausgebildet sein.

Erfindungsgemäß weist der Stator zumindest zwei Windungen auf und ist zumindest der sechste Pin in der zweiten Nut mit einem siebten Pin im 6n-1 Layer in einer dritten Nut mittels einer sechsten Verbindungsart verbunden.

Eine Kombination der vorher genannten Verbindungsarten auf unterschiedlichen oder gleichen Stirnseiten des Stators ist auch möglich. Durch eine gleiche Verbindungsart auf gleichen Stirnseiten und verschiedenen Verbindungsarten auf unterschiedlichen Stirnseiten des Stators ist eine einfache und schnelle Fertigung möglich. Beispielsweise wird auf einer Stirnseite die Verbindung durch eine Art vorgebogene Pins, sogenannte Doppelpins oder auch Upins genannt, hergestellt und auf einer anderen Stirnseite des Stators werden Pins einzeln oder jeweils eine Seite des Doppelpins miteinander verschweißt. Die Schweißpunkte können an Füßen der Pins oder Doppelpins liegen.

Erfindungsgemäß weist der Stator eine Vielzahl von Windungen auf, die sich über den gesamten Umfang des Stators erstrecken und dabei eine Teilspule bilden.

Die Wicklungen weisen dadurch eine Symmetrie auf, welche ein gleichmäßiges Drehfeld erzeugt.

In einer weiteren Ausgestaltung kann je ein Pin von drei Teilspulen mittels einer siebten Verbindungsart oder einer achten Verbindungsart miteinander verbunden sein und eine Spule bilden. Bei diesen Pins kann es sich um sogenannte Endpins handeln, da sie das Ende einer Teilspule markieren. Bevorzugt können die Teilspulen sechs Spulen bilden und diesen derart drei Phasen zugeordnet sein, dass sich jeweils zwei Spulen, die einer gleichen Phase zugeordnet sind, in vier benachbarten Nuten befinden.

Weiter bevorzugt kann je ein Eingang eines Endpins von zwei Spulen mittels einer neunten Verbindungsart miteinander verbunden sein.

Die neunte Verbindungsart kann durch einen an den Pins angebrachten Leiter oder durch einen leitenden Ring hergestellt werden.

Die beiden Spulen können parallel verbunden sein und können zusätzlich von einer gleichen Phase gespeist werden. Die Parallelverbindung kann durch das paarweise Verbinden von einem ersten und siebten oder sechsten und zwölften Endpin erfolgen.

Zwei Spulen in gleichen Nuten können parallelgeschaltet und von einer Phase gespeist werden, sodass ein Stator mit Windungen für eine dreiphasige elektrische Maschine ausgebildet wird.

Ferner können jeweils zwei Phasen einen annährend identischen Strom- und Spannungsverlauf aufweisen und dadurch ein sechs Phaseninverter lediglich einen dreiphasigen Motor ansteuern. Mit dieser Anordnung ist eine Stromteilung der Schaltelemente im Inverter möglich.

Erfindungsgemäß weist ein Fahrzeug eine elektrische Maschine mit einem Stator gemäß einer der bevorzugten Ausgestaltungen auf.

### Figurenbeschreibung

Figur 1 zeigt einen Stator.
Figur 2 zeigt einen Stator mit acht Nuten und sechs Layer.
Figur 3 zeigt ein Wickelschema einer ersten Teilspule.
Figur 4 zeigt ein Wickelschema einer zweiten Teilspule.
Figur 5 zeigt ein Wickelschema einer dritten Teilspule.
Figur 6 zeigt einen Stator mit drei Teilspulen und deren Verbindung miteinander und somit eine erste Spule.
Figur 7 zeigt ein Wickelschema einer weiteren ersten Teilspule.
Figur 8 zeigt ein Wickelschema einer weiteren zweiten Teilspule.
Figur 9 zeigt ein Wickelschema einer weiteren dritten Teilspule.
Figur 10 zeigt einen Stator mit drei weiteren Teilspulen und deren Verbindung miteinander und somit eine zweite Spule.
Figur 11 zeigt einen Stator mit zwei Spulen, bestehend aus jeweils drei Teilspulen.
Figur 12 zeigt einen Stator mit zwei weiteren Spulen.
Figur 13 zeigt einen Stator mit zwei weiteren Spulen.
Figur 14 zeigt einen Stator mit sechs Spulen.
Figur 15 zeigt ein Windungsschema einer ersten Spule.
Figur 16 zeigt ein Windungsschema einer zweiten Spule.
Figur 17 zeigt ein Fahrzeug mit einer elektrischen Maschine insbesondere einem Elektromotor mit einem Stator.

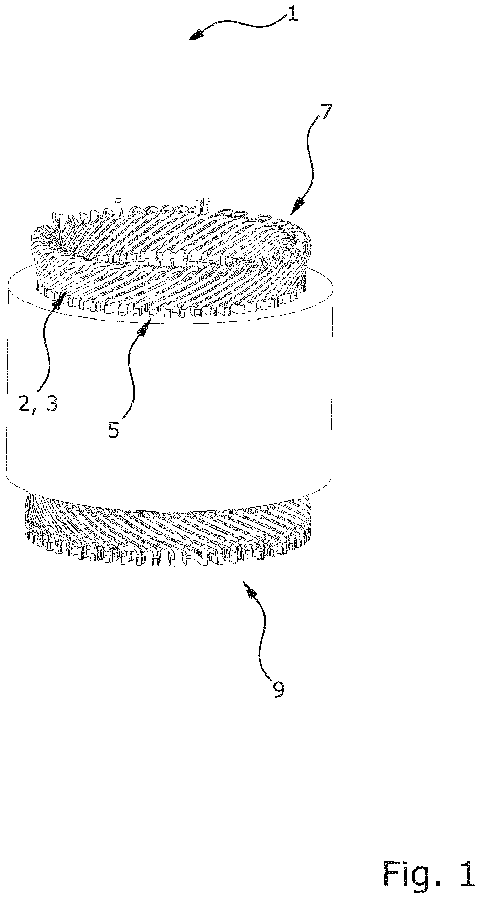

Figur 1 zeigt einen Stator 1 mit einer Vielzahl an Nuten 5 in welchen Pins 2, 3 geführt werden. Der Stator 1 weist eine erste Stirnseite 7 und eine gegenüberliegende zweite Stirnseite 9 auf. Selbstverständlich ist zum Betrieb einer elektrischen Maschine ferner ein Rotor nötig.

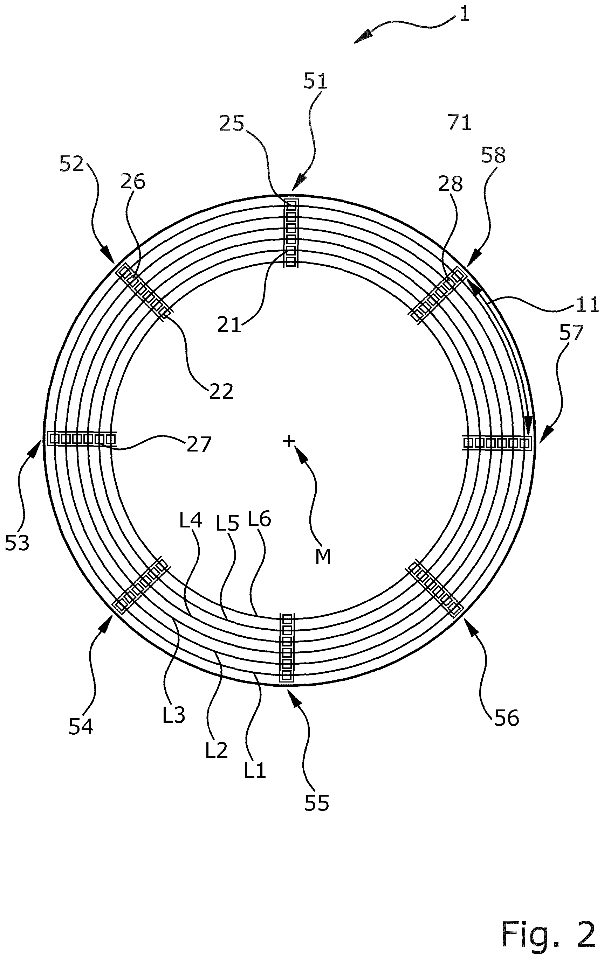

Figur 2 zeigt einen Stator 1 mit Nuten und Pins auf sechs Layer, wobei lediglich acht Nuten 51 - 58 dargestellt sind. In den Nuten sind exemplarisch Pins 21, 22, 25, 26, 27, 28 angeordnet. Die Pins liegen nebeneinander in einer Nut. Im Beispiel der Figur 2 ist für sechs nebeneinanderliegenden Pins Platz in einer Nut. Die sechs Pins innerhalb einer Nut liegen somit auf unterschiedlichen konzentrischen Kreisen L1, L2, L3, L4, L5, L6 um den Mittelpunkt M des Stators, die somit einzelne Layer bilden. Zwischen jeweils zwei Nuten liegt ein erster Abstand 11, welcher zwischen allen in Figur 2 gezeigten Nuten identisch ist.

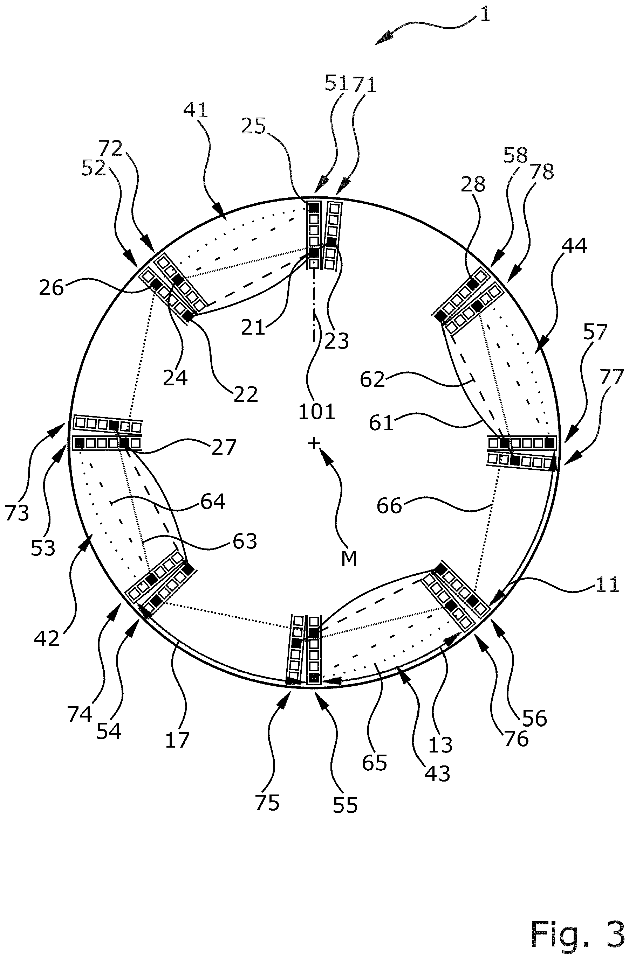

Figur 3 zeigt den Stator 1 aus Figur **2****.** Die Pins sind weiterhin auf konzentrischen Kreisen, also Layer, angeordnet, wobei die konzentrischen Kreise wegen einer besseren Darstellung nicht eingezeichnet sind. In Figur 3 ist dargestellt, welche Pins miteinander in Serie verbunden sind. Ein erster Pin 21 befindet sich in einer ersten Nut 51 im Layer L5. Dieser erste Pin 21 ist mittels einer ersten Verbindungsart 61, als durchgezogene Linie dargestellt, mit einem zweiten Pin 22 in einer zweiten Nut 52 verbunden. Der zweite Pin 22 befindet sich im Layer L6. Zwischen der ersten Nut 51 und der zweiten Nut 52 liegt ein erster Abstand 11 der gleichlang wie der erste Abstand 11 aus Figur 2 ist.

Der zweite Pin 22 ist mittels einer zweiten Verbindungsart 62, als gestrichelte Linie dargestellt, mit einem dritten Pin 23 in einer dritten Nut 71 verbunden. Der dritte Pin 23 liegt im Layer L4. Die dritte Nut 71 liegt direkt benachbart zur ersten Nut 51. Zwischen der dritten Nut 71 und der zweiten Nut 52 liegt ein vierter Abstand 17, der eine Nut länger als der erste Abstand 11 ist. Der dritte Pin 23 ist über eine dritte Verbindungsart 63, als gepunktete Linie mit sehr kurzen Abständen dargestellt, mit einem vierten Pin 24 verbunden. Der vierte Pin 24 liegt in einer vierten Nut 72. Der vierte Pin 24 liegt im Layer L3. Die vierte Nut 72 liegt direkt benachbart zur zweiten Nut 52. Zwischen der vierten Nut 72 und der ersten Nut 51 liegt ein zweiter Abstand 13, der eine Nut kürzer als der erste Abstand 11 und zwei Nuten kürzer als der vierte Abstand 17 ist.

Der vierte Pin 24 ist mittels einer vierten Verbindungsart 64, als gestrichelte Linie mit langen Abständen dargestellt, mit einem fünften Pin 25 in der ersten Nut 51 verbunden. Der fünfte Pin 25 befindet sich wiederum in der ersten Nut 51, also in derselben Nut wie der erste Pin 21. Der fünfte Pin 25 liegt im Layer L1. Zwischen dem ersten Pin 21 und dem fünften Pin 25 in der ersten Nut 51 ist somit noch Platz für drei weiteren Pins in Layer L2 - L4. Außerdem ist in der ersten Nut 51 noch Platz für einen weiteren Pin in Layer L6. Der fünfte Pin 25 ist über eine fünfte Verbindungsart 65, als gepunktete Linie mit langen Abständen dargestellt, mit einem sechsten Pin 26 verbunden. Der sechste Pin 26 liegt in der zweiten Nut 52, also derselben Nut wie der zweite Pin 22. Der sechste Pin 26 liegt im Layer L2. Zwischen dem zweiten Pin 22 und dem sechsten Pin 26 ist somit noch Platz in der zweiten Nut 52 für drei weitere Pins in den Layer L3 - L5. Außerdem ist in der zweiten Nut 52 noch Platz für einen weiteren Pin in Layer L1.

Die Verbindung des ersten, zweiten, dritten, vierten, fünften und sechsten Pins bildet eine erste Windung 41. Der erste Pin 21 ist gleichzeitig auch ein erster Endpin. Dieser Endpin weist einen Eingang 101 zum Anschluss einer Energiequelle, beispielsweise eines Inverters, auf. Der erste Endpin 21 ist daher nur mit einem weiteren Pin, also dem zweiten Pin 22, verbunden. Der erste Endpin 21 kann somit als sogenannter Einzelpin oder Ipin ausgestaltet sein.

Der sechste Pin 26 ist über eine sechste Verbindungsart 66, als gepunktete Linie mit kurzen Abständen dargestellt, mit einem siebten Pin 27 in Layer L2 in einer dritten Nut 53 verbunden. Mit dem siebten Pin 27 beginnt die vorher beschriebene serielle Verbindung der im Stator nachfolgenden Pins erneut, wobei der siebte Pin 27 ähnlich zum ersten Pin 21 mit einem Versatz der Nut um 90 Grad ist. Der siebte Pin 27 ist im Gegensatz zum ersten Pin 21 kein Endpin, da der siebte Pin 27 mit zwei weiteren Pins, also dem sechsten Pin 26 und einem weiteren Pin in Nut 54, Layer L6 verbunden ist.

Die serielle Verbindung des siebten Pins 27 mit weiteren Pins in drei weiteren Nuten 54, 73 und 74 bildet eine zweite Windung 42. Die erste, zweite, dritte, vierte und fünfte Verbindungsart 61 - 65 zwischen diesen Pins ist identisch zu der jeweiligen ersten, zweiten, dritten, vierten, fünften Verbindungsart 61 - 65 der Pins der ersten Windung 41.

Die beiden Windungen 41, 42 sind durch die sechste Verbindungsart 66 verbunden. Durch die Fortsetzung der seriellen Verbindung wird die dritte Windung 43 in vier weiteren Nuten 55, 56, 75 und 76 gebildet. Die Windungen 41, 42, 43 sind jeweils mit der sechsten Verbindungsart 66 verbunden. Die sechste Verbindungsart 66 zwischen den jeweiligen Windungen ist somit identisch. Auch die erste, zweite, dritte, vierte und fünfte Verbindungsart 61 - 65 zwischen den Pins der dritten Windung 43 ist identisch zu der ersten, zweiten, dritten, vierten und fünften Verbindungsart 61 - 65 der ersten und zweiten Windung 41, 42.

Durch die Fortsetzung der seriellen Verbindung wird die vierte Windung 44 in vier weiteren Nuten 57, 58, 77 und 78 gebildet. Die Windungen 41, 42, 43, 44 sind jeweils mit der sechsten Verbindungsart 66 verbunden. Die sechste Verbindungsart 66 zwischen den jeweiligen Windungen ist somit identisch. Auch die erste, zweite, dritte, vierte und fünfte Verbindungsart 61 - 65 zwischen den Pins der vierten Windung 44 ist identisch zu der ersten, zweiten, dritten, vierten und fünften Verbindungsart 61 - 65 der ersten, zweiten und dritten Windung 41, 42, 43.

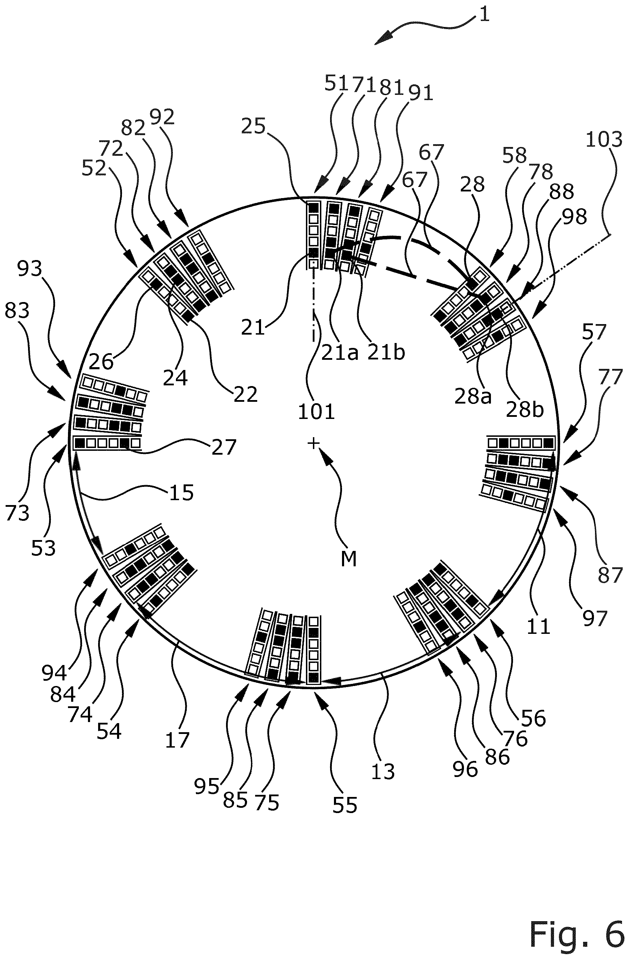

Die vier Windungen 41, 42, 43, 44 bilden durch einen Umlauf um den Stator 1 entgegen dem Uhrzeigersinn eine erste Teilspule. Der erste Pin 21 weist ferner einen Eingang 81 für den Anschluss einer Energiequelle auf. Der erste Pin 21 der Windung 41 stellt somit einen ersten Endpin dar. Die Teilspule endet mit dem Pin 28 der vierten Windung 44. Der letzte Pin 28 der vierten Windung 44 stellt somit einen zweiten Endpin dar. Der zweite Endpin 28 weist im Gegensatz zum ersten Endpin 21 jedoch Verbindungen zu zwei weiteren Pins auf, wie in Verbindung mit Figur 6 erläutert.

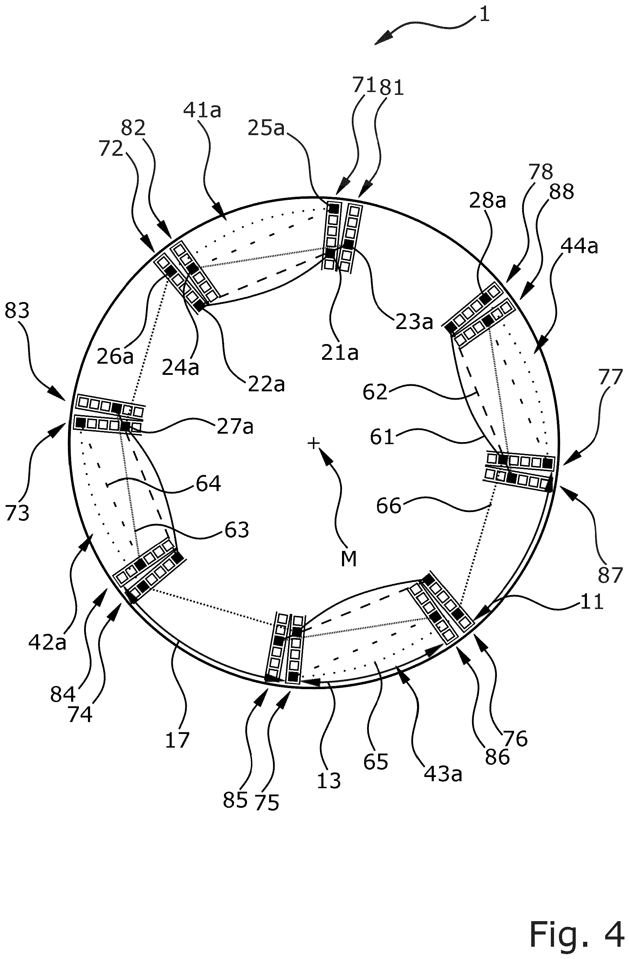

Figur 4 zeigt den Stator 1 aus Figur 3, wobei dort acht weitere Nuten 81 - 88 gezeigt sind, die sich in direkter Nachbarschaft zu den Nuten 71 - 78 aus Figur 3 befinden. Die Abstände 11, 13, 17 weisen die gleichen Längen wie in Figur 3 auf.

Die Pins 21a - 28a sind in gleicher Weise wie die Pins 21 - 28 der Figur 3 verbunden. Selbst die Verbindungsart ist identisch zur Figur 3 und durch die gleichen Bezugszeichen deutlich gemacht. In gleicher Weise wie bei Figur 3 beschrieben, werden die Windungen 41a, 42a, 43a, 44a gebildet und sind entgegen dem Uhrzeigersinn miteinander durch die sechste Verbindungsart 66 verbunden.

Die vier Windungen 41a, 42a, 43a, 44a bilden durch einen Umlauf um den Stator 1 eine zweite Teilspule. Die Teilspule beginnt mit einem Pin 21a, der ein dritter Endpin ist. Der dritte Endpin 21a weist im Gegensatz zum ersten Endpin 21 jedoch Verbindungen zu zwei weiteren Pins auf, wie in Verbindung mit Figur 6 erläutert. Die Teilspule endet mit dem Pin 28a der Windung 44a. Der letzte Pin 28a der Windung 44a stellt somit einen vierten Endpin dar.

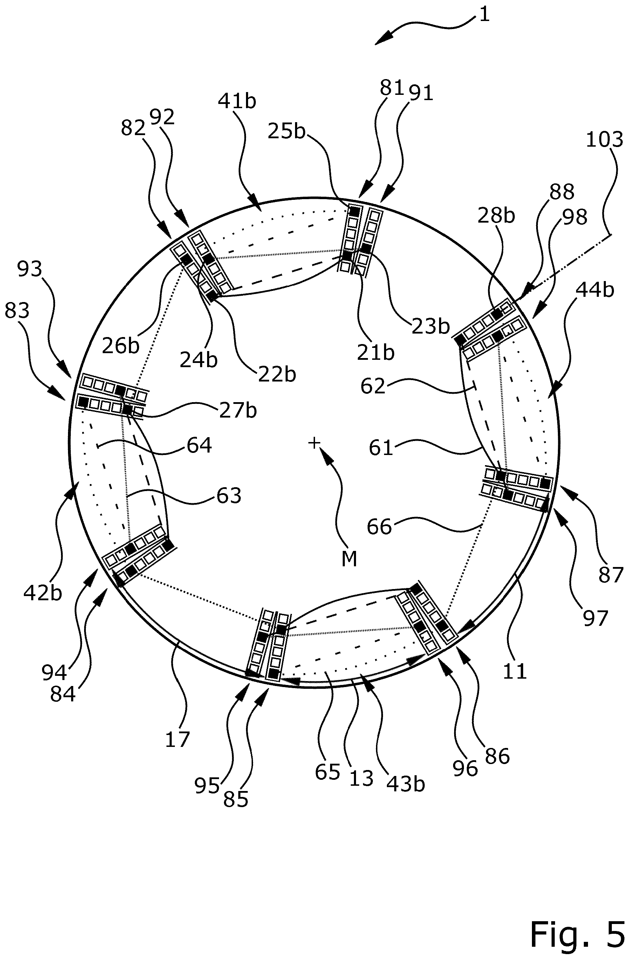

Figur 5 zeigt den Stator 1 aus Figur 3 und 4, wobei dort acht weitere Nuten 91 - 98 gezeigt sind, die sich in direkter Nachbarschaft zu den Nuten 81 - 88 aus Figur 4 befinden. Die Abstände 11, 13, 17 weisen die gleiche Längen wie in Figur 3 auf.

Die Pins 21b - 28b sind in gleicher Weise wie die Pins 21 - 28 der Figur 3 und die Pins 21a - 28a der Figur 4 verbunden. Selbst die Verbindungsart ist identisch zu den Figuren 3 und 4 und durch gleiche Bezugszeichen deutlich gemacht. In gleicher Weise wie bei Figur 3 und 4 beschrieben, werden die Windungen 41b, 42b, 43b, 44b gebildet und sind entgegen den Uhrzeigersinn miteinander durch die sechste Verbindungsart 66 verbunden.

Die vier Windungen 41b, 42b, 43b, 44b bilden durch einen Umlauf um den Stator 1 eine dritte Teilspule. Die Teilspule beginnt mit einem Pin 21b, der ein fünfter Endpin ist. Der fünfte Endpin 21b weist im Gegensatz zum ersten Endpin 21 jedoch Verbindungen zu zwei weiteren Pins auf, wie in Verbindung mit Figur 6 erläutert. Die Teilspule endet mit dem Pin 28b der Windung 44b. Der letzte Pin 28b der Windung 44b stellt somit einen sechsten Endpin dar. Der sechste Endpin 28b wiederum ist ähnlich zum ersten Endpin ausgebildet, also beispielsweise als Einzelpin oder Ipin und weist einen Ausgang 103 zum Anschluss einer Energiequelle auf.

Figur 6 zeigt eine Pinbelegung durch die erste, zweite und dritte Teilspule aus Figur 3, 4 und 5, welche durch schwarze Vierecke dargestellt sind. Gleiche Bezugszeichen bezeichnen gleiche Pins, Nuten, Verbindungen in den Figuren.

Der zweite Endpin 28 der Windung 44 der ersten Teilspule in Nut 58, Layer L2 und der dritte Endpin 21a der ersten Windung 41a der zweiten Teilspule in Nut 71, Layer L5 ist mit einer siebten Verbindungsart 67 verbunden. Die siebte Verbindungsart überwindet einen zweiten Abstand 13. Der vierte Endpin 28a der Windung 44a der zweiten Teilspule in Nut 78, Layer L2 und der fünfte Endpin 21b der ersten Windung 41b der dritten Teilspule in Nut 81, Layer L5 ist mit einer siebten Verbindungsart 67 verbunden. Die siebte Verbindungsart überwindet einen zweiten Abstand 13.

Somit verbindet die siebte Verbindungsart 67 jeweils zwei Teilspulen, wobei drei Teilspulen eine erste Spule 201 mit einem Eingang 101 und einem Ausgang 103 nach dreimaligem radialen Umlauf um den Stator entgegen dem Uhrzeigersinn bilden. Ein in der Figur dargestellter dritter Abstand 15 ist drei Nuten kürzer als der erste Abstand 11 aus der vorherigen Figur. Die Blöcke der vier benachbarten Nuten, die mit Pins der Spule belegt sind weisen jeweils den dritten Abstand voneinander auf.

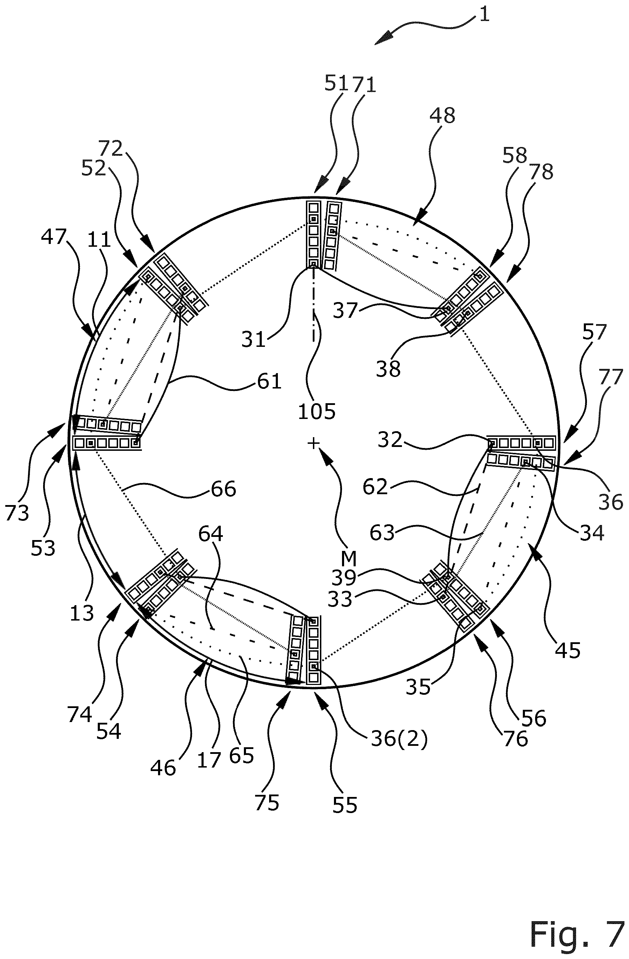

Figur 7 zeigt den Stator 1 aus Figur 2. Die Pins sind weiterhin auf konzentrischen Kreisen, also Layer, angeordnet, wobei die konzentrischen Kreise wegen einer besseren Darstellung nicht eingezeichnet sind. Es ist dargestellt, welche Pins, als schwarze Vierecke auf weißem Grund dargestellt, miteinander in Serie verbunden sind und eine erste Teilspule einer zweiten Spule 202 bilden.

Ein erster Pin 31 befindet sich in der ersten Nut 51 im Layer L6. Der erste Pin 31 ist gleichzeitig auch ein siebter Endpin 31. Dieser Endpin 31 weist einen Eingang 105 zum Anschluss einer Energiequelle, beispielsweise eines Inverters, auf. Der siebte Endpin 31 ist daher nur mit einem weiteren Pin, also dem siebten Pin 37, verbunden. Der siebte Endpin 31 kann somit als sogenannter Einzelpin oder Ipin ausgestaltete sein. Der erste Pin 31 ist mittels der ersten Verbindungsart 61, als durchgezogene Linie dargestellt, mit einem siebten Pin 37 in einer Nut 58 verbunden. Der siebte Pin 37 befindet sich im Layer L5. Zwischen der ersten Nut 51 und der Nut 58 liegt ein erster Abstand 11, der gleichlang wie der erste Abstand 11 aus Figur 2 ist.

Der siebte Pin 37 ist mittels einer sechsten Verbindungsart 66, als gepunktete Linie mit kurzen Abständen dargestellt, mit einem sechsten Pin 36 in einer Nut 57 verbunden. Der sechste Pin 36 liegt in Layer L2. Der sechste Pin 36 ist über eine fünfte Verbindungsart 65, als gepunktete Linie mit langen Abständen dargestellt, mit einem fünften Pin 35 in Nut 56 verbunden. Der fünfte Pin 35 liegt in Layer L1. Der fünfte Pin 35 ist mittels der vierten Verbindungsart 64, als gestrichelte Linie mit langen Abständen dargestellt, mit einem vierten Pin 34 in einer Nut 77 verbunden. Zwischen der Nut 77 und der Nut 56 liegt der zweite Abstand 13.

Der vierte Pin 34 ist über die dritte Verbindungsart 63, als gepunktete Linie mit sehr kurzen Abständen dargestellt, mit einem dritten Pin 33 verbunden. Der dritte Pin 33 liegt in der Nut 76. Der dritte Pin 33 liegt im Layer L4. Die Nut 76 liegt direkt benachbart zur Nut 56. Der dritte Pin 33 ist über die zweiten Verbindungsart 62, als gestrichelte Linie dargestellt, mit einem zweiten Pin 32 in der Nut 57 verbunden. Der zweite Pin 32 liegt im Layer L6. Der zweite Pin 32 liegt in der Nut 57, also derselben Nut wie der sechste Pin 36. Der sechste Pin 36 liegt im Layer L2. Zwischen dem zweiten Pin 32 und dem sechsten Pin 36 ist somit noch Platz in der Nut 57 für drei weitere Pins in den Layer L3 - L5. Außerdem ist in der Nut 57 noch Platz für einen weiteren Pin in Layer L1.

Der zweite Pin 32 ist über die erste Verbindungsart 61, als durchgezogene Linie dargestellt, mit einem neunten Pin 39 in der Nut 56 verbunden. Der neunte Pin 39 liegt im Layer L4. Der neunte Pin 39 befindet sich wiederum in der Nut 56, also in derselben Nut wie der fünfte Pin 35. Der fünfte Pin 35 liegt im Layer L1. Zwischen dem neunten Pin 39 und dem fünften Pin 35 in der Nut 56 ist somit noch Platz für drei weitere Pins in Layer L2 - L4. Außerdem ist in der Nut 56 noch Platz für einen weiteren Pin in Layer L6.

Die Verbindung des zweiten, dritten, vierten, fünften, sechsten und neunten Pins bildet eine fünfte Windung 45.

Der neunte Pin 39 ist über die fünfte Verbindungsart 65, als gepunktete Linie mit langen Abständen dargestellt, mit einem zehnten Pin 36(2) verbunden. Der zehnte Pin 36(2) liegt in der Nut 55 im Layer L2. Mit dem zehnten Pin 36(2) beginnt die vorher beschriebene serielle Verbindung der im Stator nachfolgenden Pins erneut, wobei der zehnte Pin 36(2) ähnlich zum sechsten Pin 36 mit einem Versatz der Nut um 90 Grad ist.

Die serielle Verbindung des zehnten Pins 36(2) mit weiteren Pins in drei weiteren Nuten 54, 75 und 74 bildet eine sechste Windung 46. Die erste, zweite, dritte, vierte und fünfte Verbindungsart 61 - 65 zwischen diesen Pins ist identisch zu der jeweiligen ersten, zweiten, dritten, vierten und fünften Verbindungsart 61 - 65 der Pins der ersten bis fünften Windung 41 - 45.

Die beiden Windungen 45, 46 sind durch die sechste Verbindungsart 66 verbunden. Durch die Fortsetzung der seriellen Verbindung wird die siebte Windung 47 in vier weiteren Nuten 53, 52, 73 und 72 gebildet. Die Windungen 45 - 47 sind jeweils mit der sechsten Verbindungsart 66 verbunden. Die sechste Verbindungsart 66 zwischen den jeweiligen Windungen ist somit identisch. Auch die erste, zweite, dritte, vierte und fünfte Verbindungsart 61 - 65 zwischen den Pins der siebten Windung 47 ist identisch zu der ersten, zweiten, dritten, vierten und fünften Verbindungsart 61 - 65 der vorherigen Windungen 41 - 46.

Durch die Fortsetzung der seriellen Verbindung wird die achte Windung 48 in vier weiteren Nuten 51, 58, 71 und 78 gebildet. Die Windungen 45, 46, 47, 48 sind jeweils mit der sechsten Verbindungsart 66 verbunden. Die sechste Verbindungsart 66 zwischen den jeweiligen Windungen ist somit identisch. Auch die erste, dritte, vierte und fünfte Verbindungsart 61, 63 - 65 zwischen den Pins der achten Windung 48 ist identisch zu der ersten, dritten, vierten und fünften Verbindungsart 61, 63 - 65 der vorherigen Windungen 41 - 47. Ferner weist die achte Windung 48 zwei Endpins 31, 38 auf.

Die vier Windungen 45 - 48 bilden durch einen Umlauf um den Stator 1 mit dem Uhrzeigersinn eine erste Teilspule. Die erste Teilspule der zweiten Spule 202 endet mit einem achten Endpin 38.

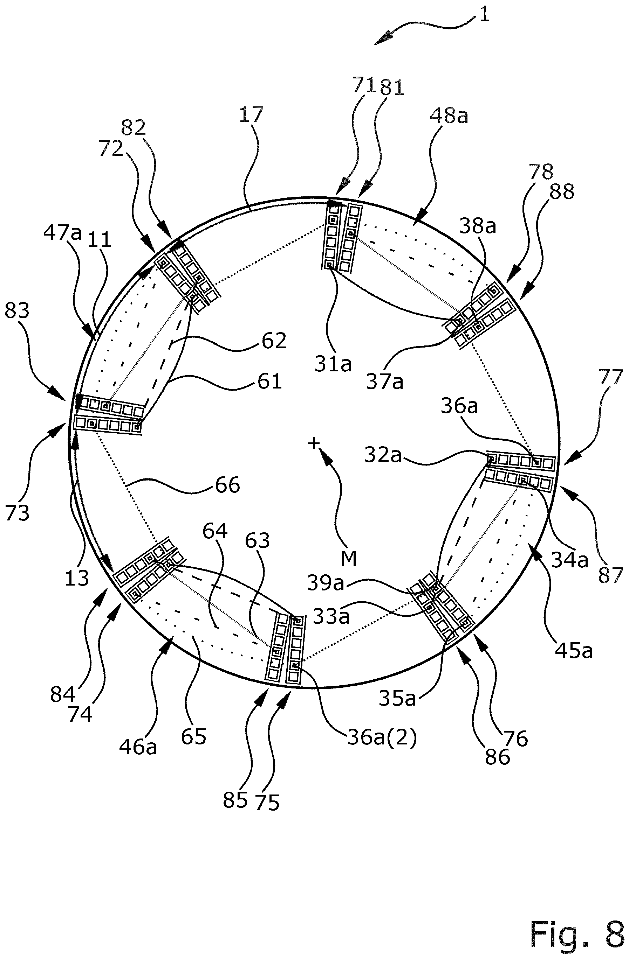

Figur 8 zeigt den Stator 1 aus Figur 7, wobei dort acht weitere Nuten 81 - 88 gezeigt sind, die sich in direkter Nachbarschaft zu den Nuten 71 - 78 aus Figur 7 befinden. Die Abstände 11, 13, 17 weisen die gleiche Länge wie in den vorherigen Figuren auf.

Die Pins 31a - 38a sind in gleicher Weise wie die Pins 31 - 38 der Figur 7 verbunden. Selbst die Verbindungsart ist identisch zu den vorherigen Figuren und durch gleiche Bezugszeichen deutlich gemacht. In gleicher Weise wie bei Figur 7 beschrieben, werden die Windungen 45a, 46a, 47a, 46a gebildet und sind mit dem Uhrzeigersinn miteinander durch die sechste Verbindungsart 66 verbunden.

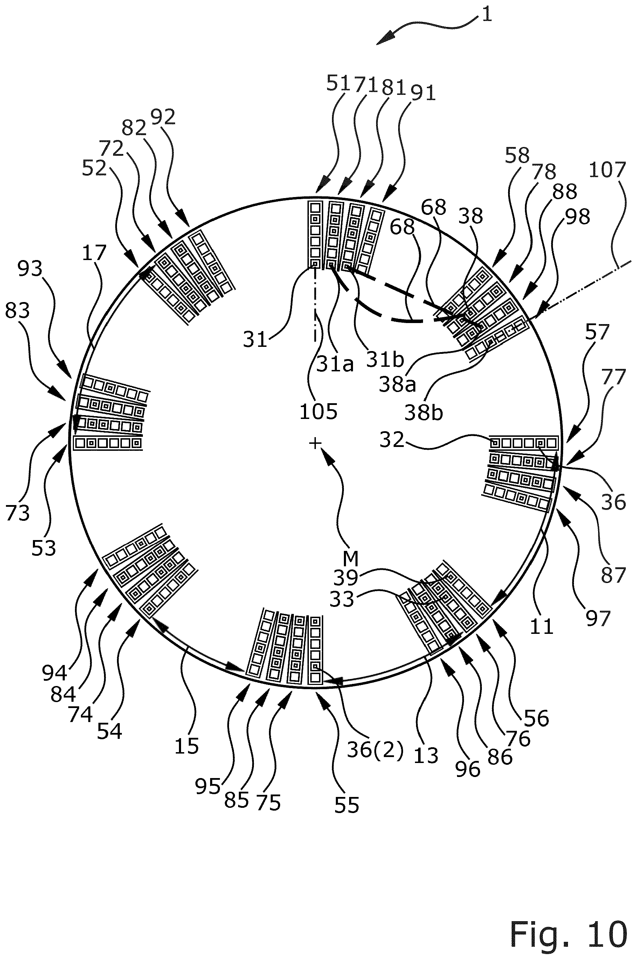

Die vier Windungen 45a, 46a, 47a, 48a bilden durch einen Umlauf um den Stator 1 eine zweite Teilspule. Die Teilspule beginnt mit einem Pin 31a, der ein neunter Endpin ist. Der neunte Endpin 31a weist im Gegensatz zum siebten Endpin 31 jedoch Verbindungen zu zwei weiteren Pins auf, wie in Verbindung mit Figur 10 erläutert. Die Teilspule endet mit dem Pin 38a der Windung 48a. Der Pin 38a der Windung 48a stellt somit einen zehnten Endpin 38a dar. Ferner weist die achte Windung 48a zwei Endpins 31a, 38a auf.

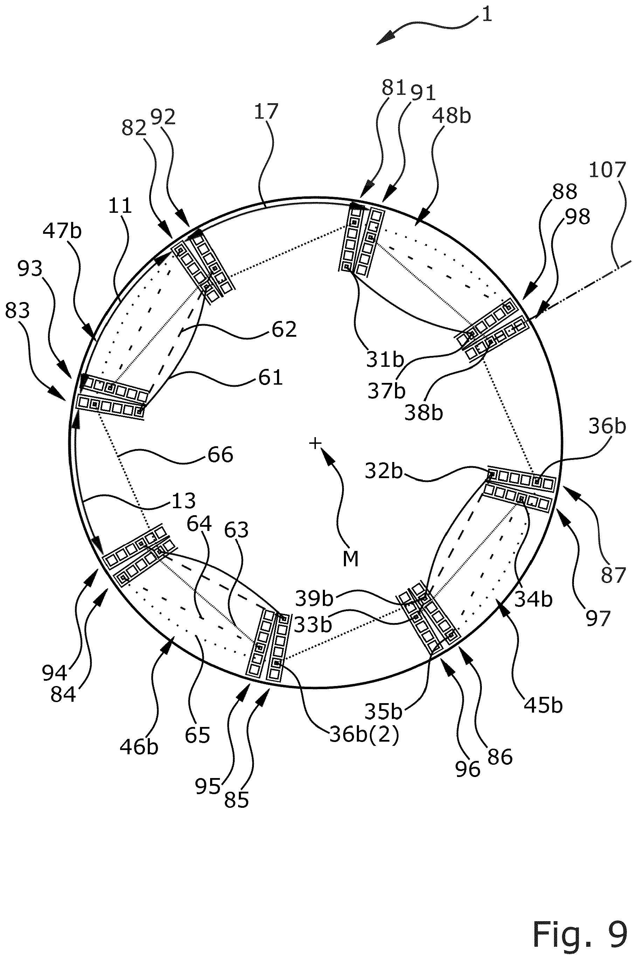

Figur 9 zeigt den Stator 1 aus Figur 7 und 8, wobei dort acht weitere Nuten 91 - 98 gezeigt sind, die sich in direkter Nachbarschaft zu den Nuten 81 - 88 aus Figur 7 befinden. Die Abstände 11, 13, 17 weisen die gleiche Längen wie in den vorherigen Figuren auf.

Die Pins 31b - 38b sind in gleicher Weise wie die Pins 31 - 38 der Figur 7 und die Pins 31a - 38a der Figur 8 verbunden. Selbst die Verbindungsart ist identisch zu den vorherigen Figuren und durch gleiche Bezugszeichen deutlich gemacht. In gleicher Weise wie bei Figur 7 und 8 beschrieben, werden die Windungen 45b, 46b, 47b, 48b gebildet und sind mit dem Uhrzeigersinn miteinander durch die sechste Verbindungsart 66 verbunden.

Die vier Windungen 45b, 46b, 47b, 48b bilden durch einen Umlauf um den Stator 1 eine dritte Teilspule. Die Teilspule beginnt mit einem Pin 31b, der ein elfter Endpin ist. Der elfte Endpin 31b weist im Gegensatz zum siebten Endpin 31 jedoch Verbindungen zu zwei weiteren Pins auf, wie in Verbindung mit Figur 10 erläutert. Die Teilspule endet mit dem Pin 38b der Windung 48b. Der Pin 38b der Windung 48b stellt somit einen zwölften Endpin dar. Der zwölfte Endpin 38b wiederum ist ähnlich zum siebten Endpin ausgebildet, also beispielsweise als Einzelpin oder Ipin, und weist einen Ausgang 107 zum Anschluss einer Energiequelle auf.

Figur 10 zeigt eine Pinbelegung durch die erste, zweite und dritte Teilspule der zweiten Spule 202 aus Figur 7, 8 und 9, welche durch schwarze Vierecke auf weißem Grund dargestellt sind. Gleiche Bezugszeichen bezeichnen gleiche Pins, Nuten, Verbindungen in den Figuren.

Der achte Endpin 38 der achten Windung 48 der ersten Teilspule in Nut 78, Layer L4, und der neunte Endpin 31a der fünften Windung 45a der zweiten Teilspule in Nut 71, Layer L6, ist mit einer achten Verbindungsart 68 verbunden. Die achte Verbindungsart überwindet einen ersten Abstand 11. Der zehnte Endpin 38a der fünften Windung 45a der zweiten Teilspule in Nut 88, Layer L2 und der elfte Endpin 31b der fünften Windung 45b der dritten Teilspule in Nut 81, Layer L6, ist mit einer achten Verbindungsart 68 verbunden. Die siebte Verbindungsart überwindet einen ersten Abstand 11.

Somit verbindet die achte Verbindungsart 68 jeweils zwei Teilspulen, wobei drei Teilspulen eine zweite Spule 202 mit einem Eingang 105 und einem Ausgang 107 nach dreimaligem radialen Umlauf um den Stator mit dem Uhrzeigersinn bilden. Ein in der Figur dargestellter dritter Abstand 15 ist drei Nuten kürzer als der erste Abstand 11 aus der vorherigen Figur. Die Blöcke der vier benachbarten Nuten, die mit Pins der Spule belegt sind, weisen jeweils den dritten Abstand voneinander auf.

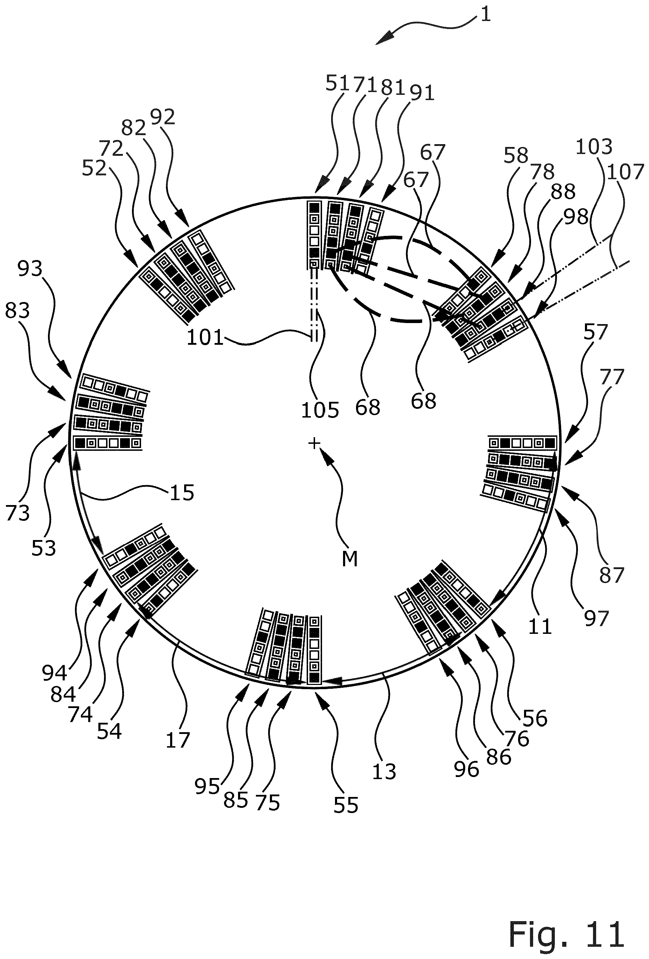

Figur 11 zeigt eine Pinbelegung durch die erste Spule 201 aus Figur 6, welche durch schwarze Vierecke dargestellt sind. Gleiche Bezugszeichen bezeichnen gleiche Pins, Nuten, Verbindungen in den Figuren. Ferner ist die zweite Spule 202 aus der Figur 10 als schwarze Vierecke auf weißem Grund dargestellt, die sich in gleichen Nuten aber unterschiedlichen Layer befindet. Die Teilspulen der beiden Spulen sind mit der siebten Verbindungsart 67 (erste Spule) oder der achten Verbindungsart 68 (zweite Spule) verbunden.

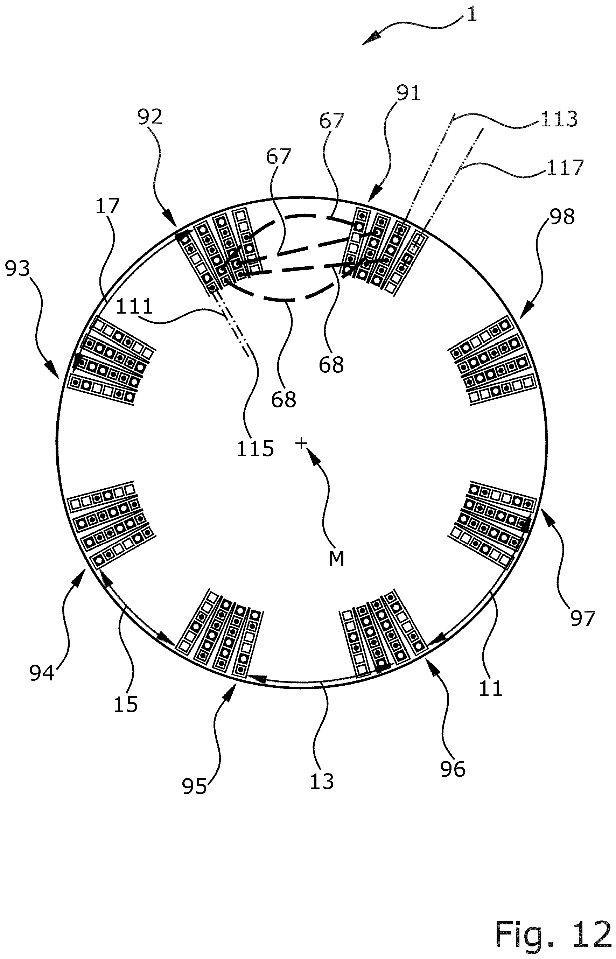

Figur 12 zeigt zwei weitere Spulen, wie jeweils durch Pins mit einem schwarzen Punkt bzw. mit einem weißen Punkt, gebildet werden. Die drei Teilspulen der Spule mit den Pins mit weißen Punkt werden gemäß der Beschreibung der Figuren 3 - 6 gebildet, wobei die Nuten um 30 Grad entgegen dem Uhrzeigersinn versetzt sind. Die drei Teilspulen der Spule mit den Pins mit schwarzen Punkt werden gemäß der Figuren 7 - 10 gebildet, wobei die Nuten um 30 Grad entgegen dem Uhrzeigersinn versetzt sind.

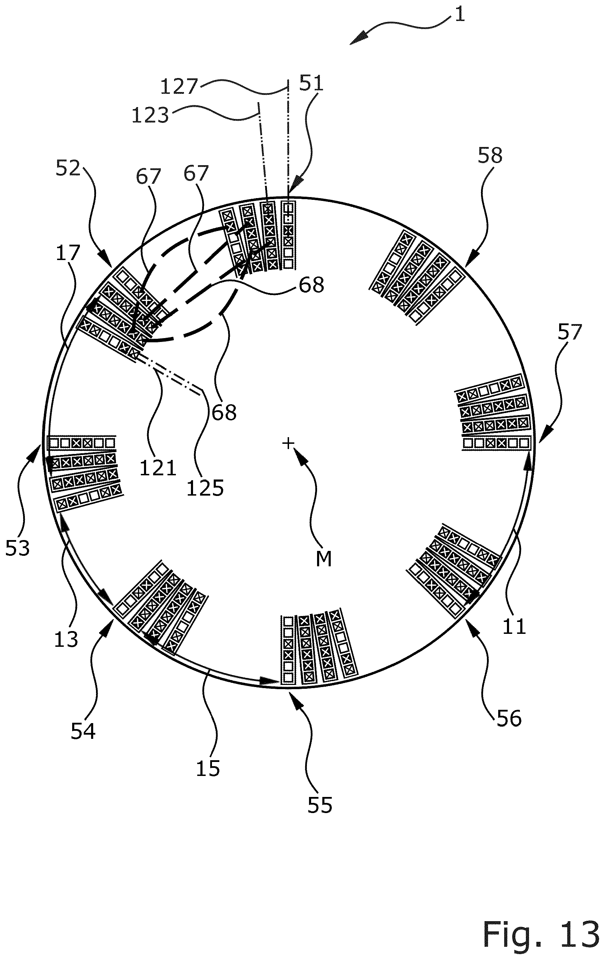

Figur 13 zeigt zwei weitere Spulen, wie jeweils durch Pins mit einem schwarzen Kreuz bzw. mit einem weißen Kreuz, gebildet werden. Die drei Teilspulen der Spule mit den Pins mit weißen Kreuz werden gemäß der Beschreibung der Figuren 3 - 6 gebildet, wobei die Nuten um 60 Grad entgegen dem Uhrzeigersinn versetzt sind. Die drei Teilspulen der Spule mit den Pins mit schwarzen Kreuz werden gemäß der Figuren 7 - 10 gebildet, wobei die Nuten um 60 Grad entgegen dem Uhrzeigersinn versetzt sind.

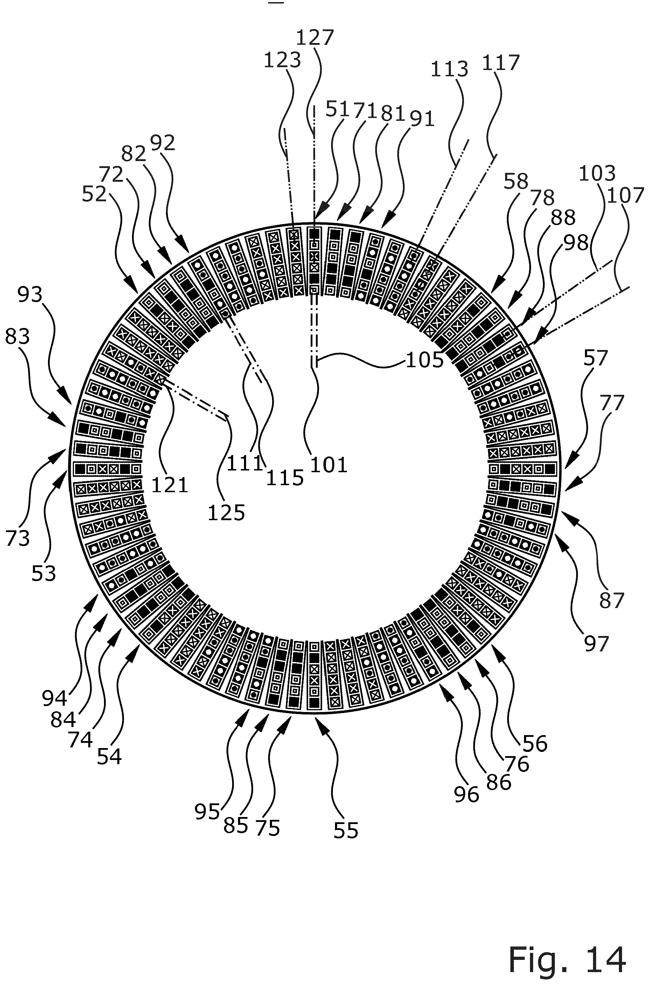

Figur 14 zeigt eine Pinbelegung durch die sechs Spulen als eine Kombination aus den Figuren 10, 11 und 12. Insbesondere aus der Lage der Ein- 101, 105, 111, 115, 121, 125 und Ausgänge 103, 107, 113, 117, 123, 127 wird ersichtlich, dass eine Verschaltung der Spulen innerhalb von fünfundzwanzig Nuten erfolgen kann. Bei dem exemplarisch dargestellten Stator mit zweiundsiebzig Nuten ist eine Verschaltung der Ein- und Ausgänge somit innerhalb von fast einem Drittel des Statorumfangs möglich. Rein bezogen auf die Ein- oder Ausgänge, wäre eine getrennte Beschaltung innerhalb von dreizehn Nuten möglich.

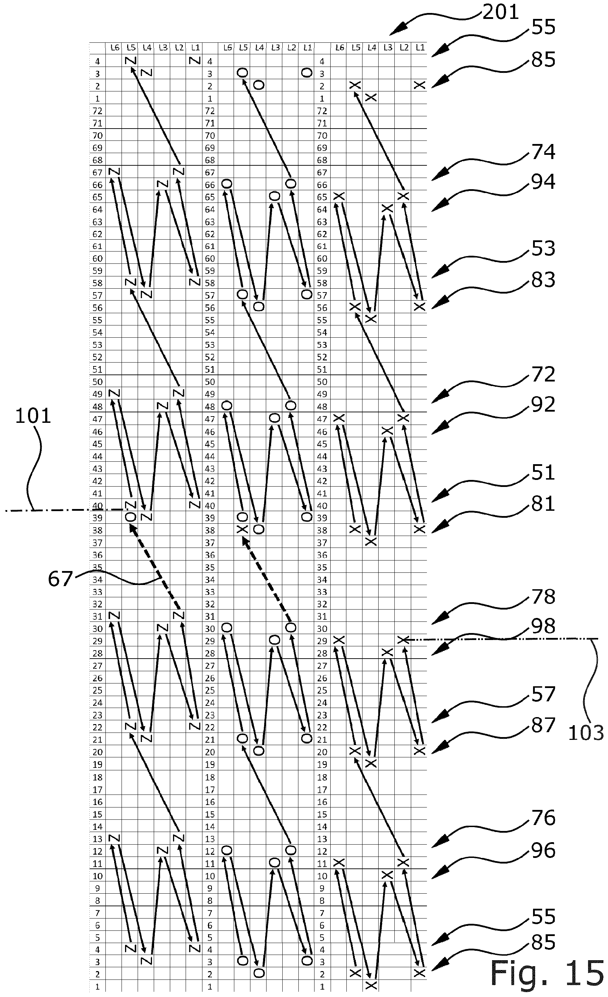

Figur 15 zeigt das Wickelschema der drei Teilspulen der ersten Spule 201. Die fortlaufende "Nutennummer" ist kein Bezugszeichen. Die Bezugszeichen mit Pfeil an den Nuten sind identisch zu den vorherigen Figuren und ermöglichen einen Vergleich mit diesen Figuren.

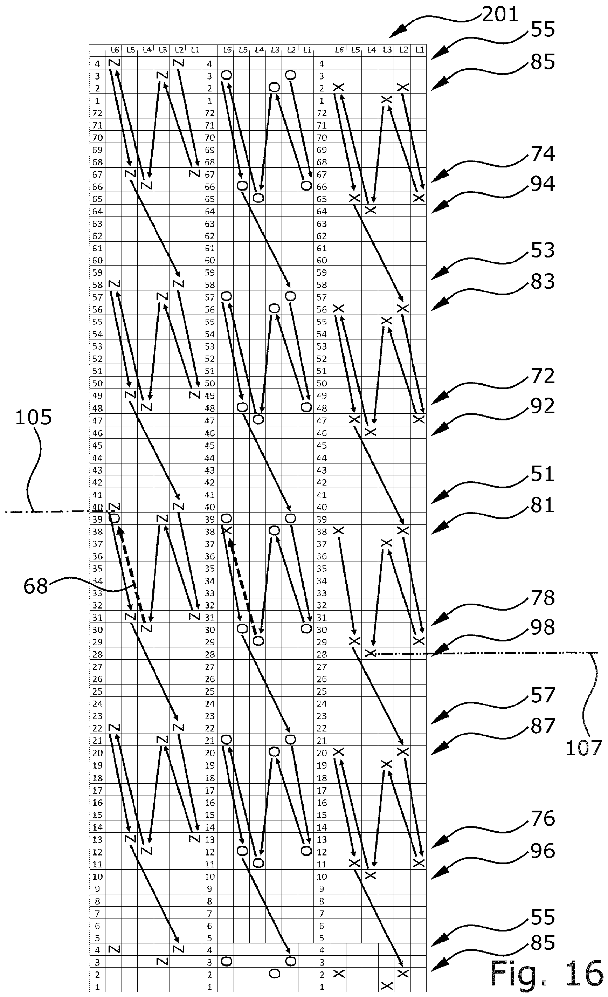

Figur 16 zeigt das Wickelschema der drei Teilspulen der zweiten Spule 202. Die fortlaufende "Nutennummer" ist kein Bezugszeichen. Die Bezugszeichen mit Pfeil an den Nuten sind identisch zu den vorherigen Figuren und ermöglichen einen Vergleich mit diesen Figuren.

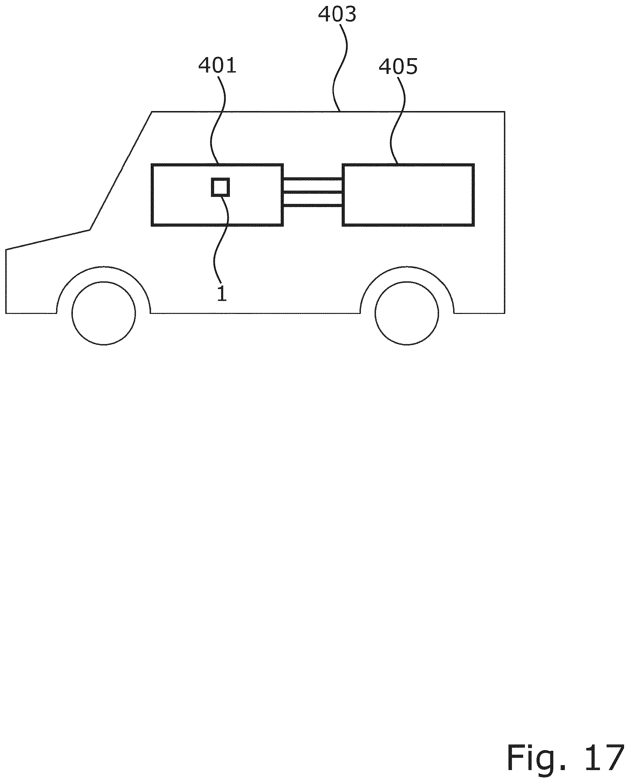

Figur 17 ist eine Prinzipskizze eines Ausführungsbeispiels eines Fahrzeugs 403, beispielsweise eines Hybridfahrzeugs oder eines Elektrofahrzeugs, umfassend eine elektrische Maschine 401, insbesondere einen Elektromotor, mit einem Ausführungsbeispiel des Stators 1 zum Antreiben des Fahrzeugs 403. Ferner kann das Fahrzeug 403 einen Inverter 405 aufweisen, der die elektrische Maschine 401 mit einem Wechselstrom aus einer Gleichstromquelle versorgt.

### Bezugszeichenliste

- 1: Stator
- 2, 3, 21-38b: Pin
- 5, 51 - 58, 71 - 78: Nut
- 81 - 88, 91 - 96: Nut
- 7: erste Stirnseite
- 9: zweite Stirnseite
- 11: erster Abstand
- 13: zweiter Abstand
- 15: dritter Abstand
- 21: erster Endpin
- 28: zweiter Endpin
- 21a: dritter Endpin
- 28a: vierter Endpin
- 21b: fünfter Endpin
- 28b: sechster Endpin
- 31: siebter Endpin
- 38: achter Endpin
- 31a: neunter Endpin
- 38a: zehnter Endpin
- 31b: elfter Endpin
- 38b: zwölfter Endpin
- 41 - 48, 41a - 48a, 41b - 48b: Windung
- 61: erste Verbindungsart
- 62: zweite Verbindungsart
- 63: dritte Verbindungsart
- 64: vierte Verbindungsart
- 65: fünfte Verbindungsart
- 66: sechste Verbindungsart
- 67: siebte Verbindungsart
- 68: achte Verbindungsart
- 101, 105, 111, 115, 121, 125: Eingang
- 103, 107, 113, 117, 123, 127: Ausgang
- 201: erste Spule
- 202: zweite Spule
- 401: elektrische Maschine
- 403: Fahrzeug
- 405: Inverter
- L1, L2, L3, L4, L5, L6: Layer
- M: Statormittelpunkt

## Patentansprüche

1. Stator (1) für eine elektrische Maschine (100), umfassend eine erste Stirnseite (7), eine gegenüberliegende zweite Stirnseite (9) eine Vielzahl von Pins (21 - 27), die auf konzentrischen Kreisen mit unterschiedlichen Abständen zu einem Statormittelpunkt (M) in Nuten (51 - 58, 71 - 78) im Stator angeordnet sind, wobei jeder konzentrische Kreis einen Layer (L1 - L6) bildet; wobei
- der Stator (1) eine Vielzahl von Windungen (41, 42) aufweist, die sich über den gesamten Umfang des Stators (1) erstrecken und dabei eine Teilspule bilden;
- jeweils sechs Pins (21 - 27) in unterschiedlichen Layer (L1 - L6) miteinander seriell verbunden sind und eine Windung (41 - 44) bilden,
- sich ein erster Pin (21) der ersten Windung (41) in einer ersten Nut (51, 53, 55, 57) im fünften Layer (L5) befindet;
- sich ein zweiter Pin (22) der ersten Windung (41) in einer zweiten Nut (52, 54, 56, 58) im sechsten Layer (L6) befindet und mit dem ersten Pin (21) auf der zweiten Stirnseite (9) mittels einer ersten Verbindungsart (61) verbunden ist, wobei die zweite Nut (52, 54, 56, 58) einen ersten radialen Abstand (11) in einer ersten Umfangsrichtung des Stators (1) zu der ersten Nut (51, 53, 55, 57) aufweist;
- sich ein dritter Pin (23) der ersten Windung (41) in einer dritten Nut (71, 73, 75, 77) im vierten Layer (L4) befindet und mit dem zweiten Pin (22) mittels einer zweiten Verbindungsart (62) verbunden ist;
- sich ein vierter Pin (24) der ersten Windung (41) in einer vierten Nut (72, 74, 76, 78) im dritten Layer (L3) befindet und mit dem dritten Pin (23) auf der zweiten Stirnseite (9) mittels einer dritten Verbindungsart (63) verbunden ist, wobei die dritte Nut (71, 73, 75, 77) zur vierten Nut einen ersten Abstand aufweist, der gleich dem ersten Abstand (11) zwischen der zweiten Nut (52, 54, 56, 58) und der ersten Nut (51, 53, 55, 57) ist, und in Umfangsrichtung auf einer gleichen Nachbarschaftsseite bezüglich der ersten Nut (51, 53, 55, 57) wie die vierte Nut (72, 74, 76, 78) bezüglich der zweiten Nut (52, 54, 56, 58) liegt;
- sich ein fünfter Pin (25) der ersten Windung (41) in der ersten Nut (51, 53, 55, 57) im ersten Layer (L1) befindet und mit dem vierten Pin (24) mittels einer vierten Verbindungsart (64) miteinander verbunden;
- sich ein sechster Pin (26) der ersten Windung (41) in der zweiten Nut (52, 54, 56, 58) im zweiten Layer (L2) befindet und mit dem fünften Pin (25) auf der zweiten Stirnseite mittels einer fünften Verbindungsart (65) verbunden ist;
- sich ein siebter Pin (27) der zweiten Windung (42) in einer weiteren Nut (53) im fünften Layer (L5) befindet und mit dem sechsten Pin (26) mittels einer sechsten Verbindungsart (66) verbunden ist;
- wobei zwischen der weiteren Nut (53) und der zweiten Nut (52, 54, 56, 58) der gleiche erste Abstand (11) wie zwischen der zweiten Nut und der ersten Nut liegt;
- mit dem siebten Pin (27) die serielle Verbindung der im Stator (1) nachfolgenden Pins erneut beginnt;
- sich die erste, zweite, dritte, vierte und fünfte Verbindungsart /61, 62, 63, 64, 65) voneinander unterscheiden.

2. Stator (1) gemäß Anspruch 1, wobei drei Teilspulen vorgesehen sind, die mittels einer siebten Verbindungsart (67) oder einer achten Verbindungsart (68) miteinander verbunden sind und eine Spule (201, 202) bilden.

3. Stator (1) gemäß Anspruch 2, wobei der Stator (1) drei Phasen aufweist, wobei jeweils zwei Spulen (201, 202) derart einer der drei Phasen zugeordnet sind, dass sich jeweils zwei Spulen, die einer gleichen Phase zugeordnet sind, in vier benachbarten Nuten (51 - 58, 71 - 98) befinden.

4. Stator (1) gemäß Anspruch 3, wobei je ein Eingang (101, 105, 111, 115, 121, 125) eines Endpins (21, 31) von zwei Spulen (201, 202) mittels einer neunten Verbindungsart miteinander verbunden ist.

5. Stator (1) gemäß Anspruch 4, wobei je ein Ausgang (103, 107, 113, 117, 123, 127) eines Endpins (28b, 38b) der zwei Spulen (201, 202) miteinander verbunden ist und die zwei Spulen (201, 202) dadurch parallelgeschaltet zugeordnet sind.

6. Fahrzeug (403) mit einer elektrischen Maschine (401) mit einem Stator (1) gemäß einem der vorherigen Ansprüche.

## Claims

1. Stator (1) for an electric machine (100), comprising a first end face (7), an opposite second end face (9) a multiplicity of pins (21-27), which are arranged in concentric circles at different distances from a stator centre point (M) in slots (51-58, 71-78) in the stator, wherein each concentric circle forms a layer (L1-L6); wherein
- the stator (1) has a multiplicity of turns (41, 42), which extend over the entire circumference of the stator (1) and thereby form a part-coil;
- in each case six pins (21-27) in different layers (L1-L6) are connected to one another in series and form a turn (41-44),
- a first pin (21) of the first turn (41) is located in a first slot (51, 53, 55, 57) in the fifth layer (L5);
- a second pin (22) of the first turn (41) is located in a second slot (52, 54, 56, 58) in the sixth layer (L6) and is connected to the first pin (21) on the second end face (9) by means of a first type of connection (61), wherein the second slot (52, 54, 56, 58) is at a first radial distance (11) from the first slot (51, 53, 55, 57) in a first circumferential direction of the stator (1);
- a third pin (23) of the first turn (41) is located in a third slot (71, 73, 75, 77) in the fourth layer (L4) and is connected to the second pin (22) by means of a second type of connection (62);
- a fourth pin (24) of the first turn (41) is located in a fourth slot (72, 74, 76, 78) in the third layer (L3) and is connected to the third pin (23) on the second end face (9) by means of a third type of connection (63), wherein the third slot (71, 73, 75, 77) is at a first distance from the fourth slot, this first distance being equal to the first distance (11) between the second slot (52, 54, 56, 58) and the first slot (51, 53, 55, 57), and in the circumferential direction is situated on the same neighbouring side with respect to the first slot (51, 53, 55, 57) as the fourth slot (72, 74, 76, 78) with respect to the second slot (52, 54, 56, 58);
- a fifth pin (25) of the first turn (41) is located in the first slot (51, 53, 55, 57) in the first layer (L1) and connected to one another to the fourth pin (24) by means of a fourth type of connection (64);
- a sixth pin (26) of the first turn (41) is located in the second slot (52, 54, 56, 58) in the second layer (L2) and is connected to the fifth pin (25) on the second end face by means of a fifth type of connection (65);
- a seventh pin (27) of the second turn (42) is located in a further slot (53) in the fifth layer (L5) and is connected to the sixth pin (26) by means of a sixth type of connection (66);
- wherein the same first distance (11) as between the second slot and the first slot is present between the further slot (53) and the second slot (52, 54, 56, 58);
- the series connection of the pins following in the stator (1) begins again with the seventh pin (27);
- the first, the second, the third, the fourth and the fifth type of connection (61, 62, 63, 64, 65) differ from one another.

2. Stator (1) according to Claim 1, wherein three part-coils are provided, which are connected to one another by means of a seventh type of connection (67) or an eighth type of connection (68) and form a coil (201, 202).

3. Stator (1) according to Claim 2, wherein the stator (1) has three phases, wherein in each case two coils (201, 202) are assigned to one of the three phases in such a way that in each case two coils, which are assigned to the same phase, are located in four adjacent slots (51-58, 71-98).

4. Stator (1) according to Claim 3, wherein a respective input (101, 105, 111, 115, 121, 125) of an end pin (21, 31) of two coils (201, 202) are connected to one another by means of a ninth type of connection.

5. Stator (1) according to Claim 4, wherein a respective output (103, 107, 113, 117, 123, 127) of an end pin (28b, 38b) of the two coils (201, 202) are connected to one another and the two coils (201, 202) are assigned in a manner connected in parallel as a result.

6. Vehicle (403) having an electric machine (401) with a stator (1) according to any of the preceding claims.

## Revendications

1. Stator (1) pour une machine électrique (100), comprenant une première face d'extrémité (7), une deuxième face d'extrémité (9) opposée une pluralité d'épingles (21 - 27) agencées sur des cercles concentriques à différentes distances d'un centre (M) de stator dans des encoches (51 - 58, 71 - 78) dans le stator, chaque cercle concentrique formant une couche (L1 - L6) ; dans lequel
- le stator (1) comprend une pluralité de spires (41, 42) qui s'étendent sur toute la circonférence du stator (1), formant ainsi une bobine partielle ;
- six épingles (21 - 27) sont respectivement connectées en série les unes aux autres dans différentes couches (L1 - L6) et forment une spire (41 - 44),
- une première épingle (21) de la première spire (41) se trouve dans une première encoche (51, 53, 55, 57) de la cinquième couche (L5) ;
- une deuxième épingle (22) de la première spire (41) se trouve dans une deuxième encoche (52, 54, 56, 58) de la sixième couche (L6) et est connectée à la première épingle (21) sur la deuxième face d'extrémité (9) au moyen d'un premier type de connexion (61), la deuxième encoche (52, 54, 56, 58) présentant une première distance radiale (11) dans une première direction circonférentielle du stator (1) par rapport à la première encoche (51, 53, 55, 57) ;
- une troisième épingle (23) de la première spire (41) est située dans une troisième encoche (71, 73, 75, 77) de la quatrième couche (L4) et est connectée à la deuxième épingle (22) au moyen d'un deuxième type de connexion (62) ;
- une quatrième épingle (24) de la première spire (41) se trouve dans une quatrième encoche (72, 74, 76, 78) de la troisième couche (L3) et est connectée à la troisième épingle (23) sur la deuxième face frontale (9) au moyen d'un troisième type de connexion (63), la troisième encoche (71, 73, 75, 77) présentant une première distance par rapport à la quatrième encoche, qui est égale à la première distance (11) entre la deuxième encoche (52, 54, 56, 58) et la première encoche (51, 53, 55, 57) et qui se trouve, dans la direction circonférentielle, sur un même côté de voisinage par rapport à la première encoche (51, 53, 55, 57) que la quatrième encoche (72, 74, 76, 78) par rapport à la deuxième encoche (52, 54, 56, 58) ;
- une cinquième épingle (25) de la première spire (41) est située dans la première encoche (51, 53, 55, 57) dans la première couche (L1) et connectée entre elles à la quatrième épingle (24) au moyen d'un quatrième type de connexion (64) ;
- une sixième épingle (26) de la première spire (41) se trouve dans la deuxième encoche (52, 54, 56, 58) de la deuxième couche (L2) et est connectée à la cinquième épingle (25) sur la deuxième face frontale au moyen d'un cinquième type de connexion (65) ;
- une septième épingle (27) de la deuxième spire (42) se trouve dans une autre encoche (53) dans la cinquième couche (L5) et est connectée à la sixième épingle (26) au moyen d'un sixième type de connexion (66) ;
- entre ladite autre encoche (53) et la deuxième encoche (52, 54, 56, 58), il y a la même première distance (11) qu'entre la deuxième encoche et la première encoche ;
- avec la septième épingle (27), la connexion en série des épingles suivantes dans le stator (1) recommence ;
- les premier, deuxième, troisième, quatrième et cinquième types de connexion (61, 62, 63, 64, 65) sont différents les uns des autres.

2. Stator (1) selon la revendication 1, dans lequel il est prévu trois bobines partielles qui sont connectées entre elles au moyen d'un septième type de connexion (67) ou d'un huitième type de connexion (68) et qui forment une bobine (201, 202).

3. Stator (1) selon la revendication 2, dans lequel le stator (1) présente trois phases, deux bobines (201, 202) étant respectivement associées à l'une des trois phases de telle sorte que deux bobines chacune associées à une même phase se trouvent dans quatre encoches (51 - 58, 71 - 98) voisines.

4. Stator (1) selon la revendication 3, dans lequel des entrées (101, 105, 111, 115, 121, 125) de chacune des épingles d'extrémité (21, 31) de deux bobines (201, 202) sont reliées entre elles au moyen d'un neuvième type de connexion.

5. Stator (1) selon la revendication 4, dans lequel une sortie (103, 107, 113, 117, 123, 127) de chacune des épingles d'extrémité (28b, 38b) des deux bobines (201, 202) est connectée à une autre, les deux bobines (201, 202) étant ainsi associées en parallèle.

6. Véhicule (403) comprenant une machine électrique (401) ayant un stator (1) selon l'une des revendications précédentes.
